(19) Europäisches Patentamt

European Patent Office

Office européen des brevets

(11) **EP 1 710 562 A2**

(12) **EUROPEAN PATENT APPLICATION**

(43) Date of publication:
**11.10.2006 Bulletin 2006/41**

(51) Int Cl.:
*G01N 21/59* (2006.01)　　*B01L 3/00* (2006.01)
*C12Q 1/68* (2006.01)

(21) Application number: **06251949.1**

(22) Date of filing: **06.04.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **08.04.2005　US 102511**

(71) Applicant: **Agilent Technologies, Inc.
Palo Alto, CA 94306 (US)**

(72) Inventor: **Joyce, Timothy H.
Loveland,
Colorado 80537-0599 (US)**

(74) Representative: **Exell, Jonathan Mark et al
Williams Powell
Morley House
26-30 Holborn Viaduct
London EC1A 2BP (GB)**

(54) **Microfluidic system and method of utilization**

(57)　Systems and methods used for isolating and analyzing biological material. More particularly, microfluidic devices (23) including chemical array(s) (22) and detection systems (20) are used for analyzing biological material.

FIG. 1

**Description**

BACKGROUND OF THE INVENTION

Microfluidic devices have the capability of separating small volumes of material using a chemical array platform. These devices comprise a number of channels that can be used for directing samples and separating biological molecules such as nucleic acids and proteins.

The chemical array platform comprises a number of surface bound molecules, such as nucleotides or proteins, which can be arranged in pre-determined locations. Chemical arrays are platforms that provide for differential separation of molecules from a complex sample. For example, polynucleotide arrays (such as DNA or RNA arrays) are known to those skilled in the art and are used, for example, as diagnostic or screening tools. Employing this type of array a practitioner can identify, for example, a genetic marker from a heterogenous sample where the marker may be indicative of a disease.

Today's microfluidic devices for separating and analyzing molecules such as nucleic acids, proteins, etc. provide practitioners with technology that can accomplish in minutes what use to take days or even months. However, many of the methodologies used with microfluidic devices described in the art suffer the disadvantage that quantitation and characterization of a sample is not possible until the final elution of sample from the microfluidic device. This can be problematic because, for example, samples can be lost or reduced during transfer to different containers. In addition, many of these procedures require manual labor to quantify the types and amounts of sample subjected to analysis. There can also be the added expense of using a separate instrument to quantify and characterize the samples. Thus, it would be advantageous to avoid having to transfer samples and to be able to quantify and identify molecules within or proximate to the microfluidic device.

Spectrophotometers similar to a nano-spectrophotometer allow a practitioner to measure analyte concentrations in sample volumes of, for example, one microliter. The sensitivity range of these devices for DNA detection is between 2 and 5700 ng/$\mu$L. The spectral range of these devices is between 220 and 750 nm and it is possible to scan all wavelengths throughout the range. A single measurement cycle takes only about 10 seconds. The instruments are computer-based systems driven by a central processing unit, which allows the practitioner to archive a large number of measurements. Unlike other small spectrophotometers, these spectrophotometers are able to scan samples throughout the 220-750 nm range. This is a very useful feature since it can provide important analytical information such as checking the efficiency of dye incorporation. These detection devices are state-of-the-art for nucleic acid and protein concentration measurements.

Currently, there is a need for a microfluidic system comprising a microfluidic device together with an integrated detection system.

SUMMARY OF THE INVENTION

The present invention pertains to a microfluidic system having a microfluidic device comprising one or more chemical arrays and at least one detection system. Optionally, a central processing unit can be in communication with the microfluidic device of the instant invention. The present device can be used to isolate and analyze complex material such as a biological sample comprising a heterogenous population of analytes.

One embodiment of the present invention is directed to a microfluidic system including a device comprising one or more chemical arrays together with at least one detection system. The array can be used to separate analytes within a sample. Following the separation of analytes within the sample, a detection system can be used to quantitate and characterize the separated analytes. The microfluidic device of the present embodiment also comprises one or more microfluidic channels. In one aspect, the detection system is in optical communication with a microfluidic channel of the device. Optical communication herein means a sufficient proximity to detect optical signals from fluids or molecules traversing within the channel. The detection system can be continuous with or adjacent to a channel of the microfluidic device. In one aspect, the channel is fully or partially covered.

Another embodiment of the present invention is directed toward methods for analyzing a sample from a complex sample matrix. In certain aspects, the methods employ a microfluidic system including a microfluidic device comprising a chemical array and a detection device. The microfluidic device also comprises one or more microfluidic channels. In one aspect, the detection device is continuous with or in proximity to a channel which is downstream of a chemical array. These methods facilitate rapid and high throughput screening and analysis. The methods of the current embodiment permit in situ detection and characterization, thus problems associated with reduced sample during transfer to other containers is minimized.

BRIEF DESCRIPTION OF DRAWINGS

For a better understanding of the present invention, together with other and further objects thereof, reference is made to the accompanying drawings and detailed description and its scope will be pointed out in the appended claims.

Figure 1 is a schematic illustration of a microfluidic system according to one aspect of the present invention;

Figure 2A is a schematic drawing of a nanopore system in conjunction with a chemical array device according to one aspect of the invention, and Figure 2B shows the nanopore system including a nanodetector;

Figure 3 is a schematic drawing of a nanodetector having a steering prism; and

Figure 4 represents a schematic of a nanodetector having a plurality of steering prisms.

DETAILED DESCRIPTION OF THE INVENTION

The present invention pertains to a microfluidic system 10 incorporating therein a microfluidic device 23 comprising one or more chemical arrays 22 together with at least one detection system 20. Optionally, a central processing unit can be in communication with the microfluidic device 23 of the instant invention. The microfluidic device 23 of the present invention can be used to isolate and analyze complex materials such as a biological sample comprising a heterogenous population of analytes.

Before the present invention is described, it is to be understood that this invention is not limited to particular embodiments described. It is also to be understood that the terminology used herein is for the purpose of describing particular embodiments only, and is not intended to be limiting, since the scope of the present invention will be limited only by the appended claims.

Unless defined otherwise, all technical and scientific terms used herein have the same meaning as commonly understood by one of ordinary skill in the art to which this invention belongs. Although any methods and materials similar or equivalent to those described herein can also be used in the practice or testing of the present invention, particular methods and materials are now described. Methods recited herein may be carried out in any order which is logically possible, in addition to a particular order disclosed.

All publications mentioned herein are incorporated herein by reference to disclose and describe the methods and/or materials in connection with which the publications are cited.

The practice of the present invention will employ, unless otherwise indicated, conventional techniques of chemistry, biochemistry, molecular biology, and medicine, including diagnostics, which are within the skill of the art. Such techniques are explained fully in the literature. See, e.g., Solid-Phase Synthesis, Blossey, E. C. and Neckers, D. C. Eds. 1975; Sambrook, Fritsch & Maniatis, Molecular Cloning: A Laboratory Manual; DNA Cloning, Vols. I and II (D.N. Glover ed.); Oligonucleotide Synthesis (M.J. Gait ed.); Nucleic Acid Hybridization (B.D. Hames & S.J. Higgins eds.); and the series, Methods In Enzymology (S. Colowick and N. Kaplan eds., Academic Press, Inc.); Beaucage and Carruthers, Tetrahedron Lett., 22:1859-1862 (1981); Matteucci, et al, J. Am. Chem. Soc., 103:3185 (1981); Letsinger, R.L. and Mahadevan, V., J. Amer. Chem. Soc., 88:5319-5324, the entire teachings of which are incorporated herein by reference.

The following definitions are provided for specific terms that are used in the following written description.

It must be noted that as used herein and in the appended claims, the singular forms "a", "and", and "the" include plural referents unless the context clearly dictates otherwise. Thus, for example, reference to "the chemical array" includes reference to one or more chemical arrays, chemical array platforms and equivalents thereof known to those skilled in the art, and so forth.

It will also be appreciated that throughout the present application, that words such as "cover", "base" "front", "back", "top", "upper", and "lower" are used in a relative sense only.

A "biopolymer" is a polymer of one or more types of repeating units. Biopolymers are typically found in biological systems and particularly include polysaccharides (such as carbohydrates), peptides (which term is used to include polypeptides and proteins) and polynucleotides as well as their analogs such as those compounds composed of or containing amino acid analogs or non-amino acid groups, or nucleotide analogs or non-nucleotide groups. Biopolymers include polynucleotides in which the conventional backbone has been replaced with a non-naturally occurring or synthetic backbone, and nucleic acids (or synthetic or naturally occurring analogs) in which one or more of the conventional bases has been replaced with a group (natural or synthetic) capable of participating in Watson-Crick type hydrogen bonding interactions.

Polynucleotides include single or multiple stranded configurations, where one or more of the strands may or may not be completely aligned with another.

A "peptide" is used to refer to an amino acid multimer of any length (e.g., more than 10, 10 to 100, or more amino acid units.

A "nucleotide" refers to a sub-unit of a nucleic acid and has a phosphate group, a five carbon sugar and a nitrogen containing base, as well as functional analogs (whether synthetic or naturally occurring) of such sub-units which in the polymer form (as a polynucleotide) can hybridize with naturally occurring polynucleotides in a sequence specific manner analogous to that of two naturally occurring polynucleotides. Biopolymers include DNA (including cDNA), RNA, oligonucleotides, and PNA and other polynucleotides as described in U.S. Patent No. 5,948,902 and references cited therein (all of which are also incorporated herein by reference), regardless of the source.

As used herein "nucleic acid" encompasses DNA, RNA, single-stranded, double-stranded or triple stranded and any chemical modifications thereof. Virtually any modification of the nucleic acid is contemplated by this invention. Additionally, within the practice of the present invention, a "nucleic acid" can be of almost any length, from 10, 20, 50, 100, 200, 300, 500, 750, 1000, 1500, 2000, 2500, 3000, 3500, 4000, 4500, 5000, 6000, 7000, 8000, 9000, 10,000, 15,000, 20,000, 30,000, 40,000, 50,000, 75,000, 100,000, 150,000, 200,000, 500,000, 1,000,000, 2,000,000, 5,000,000 or even more bases in length, up to a full-length chromosomal DNA molecule.

An "oligonucleotide" generally refers to a nucleotide multimer of about 10 to 100 nucleotides in length, while a "polynucleotide" includes a nucleotide multimer having any number of nucleotides.

As used herein, the terms "nucleic acid molecule," "oligonucleotide," "nucleotide sequence" and "polynucleotide" may be used interchangeably, and refer to nucleic acid molecules and polymers thereof, including conventional purine or pyrimidine bases as well as base analogs. Such molecules include without limitation, nucleic acids, and fragments thereof, from any source, synthetic or natural, in purified or unpurified form including DNA, double-stranded or single stranded (dsDNA and ssDNA), and RNA, including t-RNA, m-RNA, r-RNA, mitochondrial DNA and RNA, chloroplast DNA and RNA, DNA/RNA hybrids, or mixtures thereof, genes, chromosomes, plasmids, the genomes of biological materials such as microorganisms, e.g. bacteria, yeasts, viruses, viroids, molds, fungi, plants, animals, humans, and the like; polynucleotides containing an N- or a C-glycoside of a purine or pyrimidine base; other polymers containing nonnucleotidic backbones, for example, abasic phosphodiesters, polyamide (e.g., peptide nucleic acids (PNAs)) and polymorpholino (commercially available from the Anti-Virals, Inc., Corvallis, Oregon, as NeugeneTM polymers), and other synthetic sequence-specific nucleic acid polymers providing that the polymers contain nucleobases in a configuration which allows for base pairing and base stacking, such as is found in DNA and RNA. The polynucleotide can be only a minor fraction of a complex mixture such as a biological sample. Also included are genes, such as hemoglobin gene for sickle-cell anemia, cystic fibrosis gene, oncogenes, cDNA, and the like.

The terms "polynucleotide" and "oligonucleotide," also include known types of modifications, for example, labels which are known in the art, methylation, "caps," substitution of one or more of the naturally occurring nucleotides with an analog, internucleotide modifications such as, for example, those with uncharged linkages (e.g., methyl phosphonates, phosphotriesters, phosphoramidates, carbamates, etc.), with negatively charged linkages (e.g., phosphorothioates, phosphorodithioates, etc.), and with positively charged linkages (e.g., aminoalklyphosphoramidates, aminoalkylphosphotriesters), those containing pendant moieties, such as, for example, proteins (including nucleases, toxins, antibodies, signal peptides, poly-L-lysine, etc.), those with intercalators (e.g., acridine, psoralen, etc.), those containing chelators (e.g., metals, radioactive metals, boron, oxidative metals, etc.), those containing alkylators, those with modified linkages (e.g., alpha anomeric nucleic acids, etc.), as well as unmodified forms of the polynucleotide.

Various techniques can be employed for preparing a polynucleotide. Such polynucleotides can be obtained by biological synthesis or by chemical synthesis. For short sequences (up to about 100 nucleotides), chemical synthesis is economical, provides a convenient way of incorporating low molecular weight compounds and/or modified bases during specific synthesis steps, and is very flexible in the choice of length and region of target polynucleotide binding sequence. Polynucleotides can be synthesized by standard methods such as those used in commercial automated nucleic acid synthesizers. Chemical synthesis of DNA on a suitably modified glass or resin can result in DNA covalently attached to the surface, potentially advantageous in washing and sample handling. For longer sequences standard replication methods employed in molecular biology can be used such as the use of M13 for single stranded DNA as described by Messing, J., Methods Enzymol., 1983, 101:20-78; or the use of polymerase chain reaction as described in U.S. Patent Nos. 4,683,195; 4,683,202 and 4,965,188, the entire teachings of which are incorporated herein by reference.

Methods to make proteins are well known to those skilled in the art. One method of constructing a protein of predetermined sequence is to synthesize the desired primary structure using a commercial synthesizer. Another common method employs the use of a known nucleotide sequence which when properly aligned in an expression vector and placed in a suitable host can produce the desired protein.

The term "substrate" as used herein refers to a surface upon which biopolymer molecules or probes, e.g., an array, may be adhered.

As used herein an "array" or "chemical array" (interchangeable terms) includes any two-dimensional or substantially two-dimensional (as well as a three-dimensional) arrangement of addressable regions bearing a particular chemical moiety or moieties (e.g., biopolymers such as polynucleotide or oligonucleotide sequences (nucleic acids), polypeptides (e.g., proteins, carbohydrates, lipids, etc.) associated with that region. In the broadest sense, the preferred arrays are arrays of polymeric binding agents, where the polymeric binding agents may be any of: polypeptides, proteins, nucleic acids, polysaccharides, synthetic mimetics of such biopolymeric binding agents, etc. In many embodiments of interest, the arrays are arrays of nucleic acids, including oligonucleotides, polynucleotides, cDNAs, mRNAs, synthetic mimetics thereof, and the like. Where the arrays are arrays of nucleic acids, the nucleic acids may be covalently attached to the arrays at any point along the nucleic acid chain, but are generally attached at one of their termini (e.g. the 3' or 5' terminus). Sometimes, the arrays are arrays of polypeptides, e.g., proteins or fragments thereof.

Any given substrate may carry one, two, three or more or more arrays disposed on a front surface of the substrate. Depending upon the use, any or all of the arrays may be the same or different from one another and each may contain multiple spots or features. A typical array may contain more than ten, more than one hundred, more than one thousand more ten thousand features, or even more than one hundred thousand features, in an area of less than 20 cm2 or even less than 10 cm2. For example, features may have widths (that is, diameter, for a round spot) in the range from about 10 $\mu$m to 1.0 cm. In other embodiments each feature may have a width in the range of about 1.0 $\mu$m to 1.0 mm, usually about 5.0 mm to 500 mm, and more usually 10 mm to 200 mm. Non-round features may have area ranges equivalent to that of circular features with the foregoing width (diameter) ranges. At least some, or all, of the features are of different compositions (for example, when any repeats of each feature composition are excluded the remaining features may account for at least 5%, 10%, or 20% of the total number of features).

All of the features may be different, or some could be the same (for example, when any repeats of each feature composition are excluded the remaining features may account for at least 5%, 10%, or 20% of the total number of features). In some aspects, features are arranged in straight line rows extending left to right. In the case where arrays are formed by the in situ or deposition of previously obtained biopolymers by depositing for each feature a droplet of reagent in each cycle such as by using a pulse jet such as an inkjet type head, interfeature areas will typically be present which do not carry any polynucleotide or moieties of the array features. It will be appreciated though, that the interfeature areas could be of various sizes and configurations. It will also be appreciated that there need not be any space separating arrays in a multi-array substrate from one another although there typically will be. As per usual, A, C, G, T represent the usual nucleotides. It will be understood that there may be a linker molecule (not shown) of any known type between the front surface and the first nucleotide.

Interfeature areas will typically (but not essentially) be present which do not carry any polynucleotide (or other biopolymer or chemical moiety of a type of which the features are composed). Such interfeature areas typically will be present where the arrays are formed by processes involving drop deposition of reagents but may not be present when, for example, photolithographic array fabrication processes are used. It will be appreciated though, that the interfeature areas, when present, could be of various sizes and configurations.

An array may cover an area of less than 100 cm2, or even less than 50 cm2, 10 cm2 or 1 cm2. In many embodiments, the substrate carrying the one or more arrays will be shaped generally as a rectangular solid (although other shapes are possible), having a length of more than 4 mm and less than 1 m, usually more than 4 mm and less than 600 mm, more usually less than 400 mm; a width of more than 4 mm and less than 1 m, usually less than 500 mm and more usually less than 400 mm; and a thickness of more than 0.01 mm and less than 5.0 mm, usually more than 0.1 mm and less than 2 mm and more usually more than 0.2 mm and less than 1 mm. With arrays that are read by detecting fluorescence, the substrate may be of a material that emits low fluorescence upon illumination with the excitation light. Additionally in this situation, the substrate may be relatively transparent to reduce the absorption of the incident illuminating laser light and subsequent heating if the focused laser beam travels too slowly over a region. For example, a substrate may transmit at least 20%, or 50% (or even at least 70%, 90%, or 95%), of the illuminating light incident on the front as may be measured across the entire integrated spectrum of such illuminating light or alternatively at 532 nm or 633 nm.

As used herein, a component of a system which is "in communication with" or "communicates with" another component of a system receives input from that component and/or provides an output to that component to implement a system function. A component which is "in communication with" or which "communicates with" another component may be, but is not necessarily, physically connected to the other component. For example, the component may communicate information to the other component and/or receive information from the other component.

A "computer-based system" refers to the hardware means, software means, and data storage means used to analyze the information of the present invention. The minimum hardware of the computer-based systems of the present invention comprises a central processing unit (CPU), input means, output means, and data storage means. A skilled artisan can readily appreciate that any one of the currently available computer-based system are suitable for use in the present invention. The data storage means may comprise any manufacture comprising a recording of the present information as described above, or a memory access means that can access such a manufacture. In certain instances a computer-based system may include one or more wireless devices.

The term "assessing" and "evaluating" are used interchangeably to refer to any form of measurement, and includes determining if an element is present or not. The terms "determining," "measuring," and "assessing," and "assaying" are used interchangeably and include both quantitative and qualitative determinations. Assessing may be relative or absolute.

Polynucleotide arrays are chemical arrays comprising nucleic acids (such as DNA or RNA arrays) known and are used, e.g., as diagnostic or screening tools. Such arrays include regions of usually different sequence polynucleotides arranged in a predetermined configuration on a substrate. These regions (sometimes referenced as "features") are positioned at respective locations on the substrate. In use, the arrays, when exposed to a sample, will exhibit an observed binding or hybridization pattern. This binding pattern can be detected upon interrogating the array. For example, all polynucleotide targets (for example, DNA) in the sample can be labeled with a suitable label (such as a fluorescent dye), and the fluorescence pattern on the array accurately observed following exposure to the sample. Assuming that the different sequence polynucleotides were correctly deposited in accordance with the predetermined configuration, then the observed binding pattern will be indicative of the presence and/or concentration of one or more polynucleotide components of the sample.

Protein-based arrays are chemical arrays comprising protein or protein-derived molecules. For example, ligands or portions thereof can be employed to isolate their cognate receptor or receptor-like molecule. Binding sites of the Fab portion of antibodies can be used. Proteins or protein-derived molecules that interact with nucleic acids can be used in these arrays. The skilled artisan will well appreciate other protein-based arrays. These protein arrays typically include regions of different proteins or protein-derived molecules arranged in a predetermined configuration on a substrate. As with polynucleotide arrays, these regions are positioned at respective locations on the substrate.

The term "probe" is to be understood with reference to its target. If the target is a nucleic acid, then probe denotes a defined nucleic acid segment such as DNA or RNA, or any analog thereof, such as peptide nucleic acid (PNA), which can be used to identify a specific complementary nucleic acid sequence in a target nucleic acid. Alternatively, if the target is a protein or protein derived molecule, then the term probe denotes a molecule that can specifically interact with a protein or a portion thereof. For example, antibodies, both monoclonal and polyclonal, can be considered probes. Amplibodies can be considered probes for protein-based molecules.

The term "in fluid communication" or "fluidly connected" is intended to define components that are operably interconnected to allow fluid flow between components.

The terms "channel", "capillary", "microcapillary", "microchannel", "nanochannel", "groove", "trench" or "depression" can be used interchangeably unless otherwise indicated.

As used herein, a "nanopore" refers to an opening in a material (biological or non-biological or some combination thereof) comprising at least on nanometer dimensions. In one aspect, the term "nanopore"refers to any pore or hole between at least a pair of electrodes in a solid material. The dimensions of a nanopore may vary but are generally small enough to constrain passage of biopolymers through the nanopore such that only a single molecule may pass at a time. Nanopores can range in size, e.g., from about 1 nm to around about 300 nm. In certain embodiments, a nanopore is defined by the walls of a nanochannel that comprises the dimensions of a nanopore along at least a portion of the channel. The portion of the channel on either side of such a nanopore may define the first and second reservoirs, respectively, of the device.

The term "in" refers to being "within" and/or a portion that may also be exterior too. For instance, a biopolymer "in" a nanopore can mean that the whole biopolymer is within the opening of the nanopore or only a small portion of the biopolymer is located near the nanopore with a substantial portion protruding exterior to the nanopore.

The term "portion" or "portion of a biopolymer" refers to a part, subunit, monomeric unit, portion of a monomeric unit, atom, portion of an atom, cluster of atoms, charge or charged unit.

The term "voltage gradient" refers to a potential between any two electrodes.

The term "adjacent "refers to anything that is near, next to or adjoining. For instance, a nanopore may be near an electrode, it may be next to the electrode, it may pass through an electrode or it may be adjoining the electrode. This would include spacing in linear, two-dimensional and three-dimensional space.

The terms "hybridizing", "annealing" and "binding", with respect to polynucleotides, are used interchangeably.

A "microfluidic device" is an apparatus or component of an apparatus or system having microfluidic reaction channels and/or chambers. In one aspect, at least one reaction channel or chamber will have at least one cross-sectional dimension between about 0.1 $\mu$m and about 500 $\mu$m. Fluid in one or more channels may be laminar.

The term "channel" as used herein refers to a passage through a substrate and is used interchangeably with the terms "microchannel," "groove," "trough," or "trench." The geometry of a channel may vary widely and includes tubular passages with circular, rectangular, square, D-shaped, trapezoidal or other polygonal cross-sections. A channel may comprise varying channel geometries (e.g., rectangular at one section and trapezoidal at another section).

Channels may form curved or angular paths through the substrate, and they may cross or intersect with other channels, and in various embodiments they can be substantially parallel to one another. In certain embodiments channels are filled with a separation media, reagents (e.g., such as enzymes, polymerases, antibodies, nucleic acids, polypeptides, peptides, and the like), and/or buffers.

As used herein, the term "separation media" refers to a media in which an electrophoretic separation of sample components takes place. Separation media typically comprise several components, at least one of which is a charge-carrying component or electrolyte. The charge- carrying component is usually part of a buffer system for maintaining the separation media at a defined pH. Media for separating polynucleotides, proteins, or other biomolecules having different sizes but identical charge-frictional drag ratios in free solution, further include a sieving component. Such sieving component is typically composed of a cross-linked polymer gel, e.g., cross-linked polyacrylamide or agarose, or a polymer solution, e.g., a solution of polyacrylamide, hydroxyethyl cellulose, and the like.

Biopolymer arrays can be fabricated by depositing previously obtained biopolymers (such as from synthesis or natural sources) onto a substrate, or by in situ synthesis methods.

Methods of depositing biopolymers include dispensing droplets to a substrate from dispensers such as pin or capillaries (as described in US 5,807,522, the entire teaching of which is incorporated herein by reference) or such as pulse-jets (such as a piezoelectric inkjet head, as described in PCT publications WO 95/25116 and WO 98/41531, and elsewhere, the entire teaching of which is incorporated herein by reference).

For in situ fabrication methods, multiple different reagent droplets are deposited from drop dispensers at a given target location in order to form the final feature (hence a probe of the feature is synthesized on the array substrate). The in situ fabrication methods include those described in US 5,449,754 (the entire teaching of which is incorporated herein by reference) for synthesizing peptide arrays, and described in WO 98/41531 (the entire teaching of which is incorporated herein by reference) and the references cited therein for polynucleotides.

The in situ method for fabricating a polynucleotide array typically follows, at each of the multiple different addresses at which features are to be formed, the same conventional iterative sequence used in forming polynucleotides from nucleoside reagents on a support by methods of known chemistry. This iterative sequence is as follows: (a) coupling a selected nucleoside through a phosphite linkage to a functionalized support in the first iteration, or a nucleoside bound to the substrate (i.e. the nucleoside-modified substrate) in subsequent iterations; (b) optionally, but preferably, blocking unreacted hydroxyl groups on the substrate bound nucleoside; (c) oxidizing the phosphite linkage of step (a) to form a phosphate linkage; and (d) removing the protecting group ("deprotection") from the now substrate bound nucleoside coupled in step (a), to generate a reactive site for the next cycle of these steps. The functionalized support (in the first cycle) or deprotected coupled nucleoside (in subsequent cycles) provides a substrate bound moiety with a linking group for forming the phosphite linkage with a next nucleoside to be coupled in step (a). Final deprotection of nucleoside bases can be accomplished using alkaline conditions such as ammonium hydroxide, in a known manner.

The foregoing chemistry of the synthesis of polynucleotides is described in detail, for example, in Caruthers, Science 230: 281-285, 1985; Itakura et al., Ann. Rev. Biochem. 53: 323-356; Hunkapillar et al., Nature 310: 105-110, 1984; and in "Synthesis of Oligonucleotide Derivatives in Design and Targeted Reaction of Oligonucleotide Derivatives", CRC Press, Boca Raton, Fla., pages 100 et seq., US 4,458,066, US 4,500,707, US 5,153,319, US 5,869,643, EP 0294196, and elsewhere., the entire teachings of which are incorporated herein by reference.

As discussed above, there are a number of techniques for constructing arrays. Arrays can be used to identify and quantitate different types of RNA, DNA or protein molecules in a sample. A chemical array comprises a number of surface bound molecules that can be arranged in defined locations. For instance, a sample containing an unknown target is often labeled with a fluorescent dye, applied to the array and allowed to react or hybridize to a probe over a period of time. The array is then washed to remove unbound or inappropriately bound sample and scanned for fluorescent signal. The detected signal at each location is correlated to the probe identity.

In one aspect of the invention, an array is used as a separation device that organizes molecules from a sample into known locations on a substrate and allows the remainder to be discarded. In another aspect, it is a platform to analyze how many sample molecules were detected at each location.

In one embodiment, probe molecules of known composition (e.g., either a nucleic acid or protein) are attached to a substrate surface in a known or defined location. The pattern of features can be in the form of a grid or a linear arrangement. The detection of binding between probe molecules and sample molecules is due largely to the use of a label such as fluorescent dyes coupled to sample molecules.

Microfluidic devices of certain aspects of the present invention comprise a body substrate in which the various microfluidic elements are disposed. The body substrate includes an exterior portion or surface, as well as an interior portion that defines the various microscale channels and/or chambers of the overall microfluidic device. For example, the body structures of a microfluidic device typically employ a solid or semisolid substrate that is typically planar in structure, i.e., substantially flat or having at least one flat surface.

Often, the planar substrates are manufactured using solid substrates common in the fields of microfabrication, e.g., silica-based substrates, such as glass, quartz, silicon or polysilicon, as well as other known substrates, i.e., gallium arsenide. In the case of these substrates, common microfabrication techniques, such as photolithographic techniques, wet chemical etching, micromachining, i.e., drilling, milling and the like, can be readily applied in the fabrication of microfluidic devices and substrates. Alternatively, polymeric substrate materials can be used to fabricate the devices of the present invention, including, e.g., polydimethylsiloxanes (PDMS), polymethylmethacrylate (PMMA), polyurethane, polyvinylchloride (PVC), polystyrene polysulfone, polycarbonate, polymethylpentene, polypropylene, polyethylene, polyvinylidine fluoride, ABS (acrylonitrile-butadiene-styrene copolymer), and the like. In the case of such polymeric materials, injection molding or embossing methods may be used to form the substrates having the channel and reservoir geometries as described herein.

The channels and chambers of the device are typically fabricated into one surface of a planar substrate, as grooves, wells or depressions in that surface. A second planar substrate, typically prepared from the same or similar material, is overlaid and bonded to the first, thereby defining and sealing the channels and/or chambers of the device. Together, the upper surface of the first substrate, and the lower mated surface of the upper substrate define the channels and chambers of the device.

In certain aspects, movement of fluids through the device will be regulated by pressure and/or electrokinetic and/or electroosmotic forces to gain control over the flow of fluids in microfluidic channels. In one aspect, electrodes located in reservoirs at each end of a channel are activated to generate electrical current through the channel. The current forces molecules with different electrical charges in fluids to travel through the channels at different rates; a typical speed is one millimeter per second. Another type of electrokinesis--electrophoresis--is simply a microminiaturized version of an analytical approach routinely used in chemistry laboratories. An electric field influences the movement of charged molecules in fluids moving through the channels. Electric fields can be used to move molecules in solution or to separate molecules with very subtle differences.

Alternate methods for moving microfluids include temperature gradients or pressure. For example, small amounts of pressure applied to fluids traveling through channels create predictable and reproducible flows. Temperature gradients can move volumes of liquids around channels in microfluidic substrates, such as silicon wafers. This occurs because the surface tension of the microfluids varies with temperature; a temperature gradient of just three or four degrees Celsius is enough to cause a fluid to seek a cold region in its pathway. Chemical modifications to the substrate applied by lithography amplify the effect by creating a series of chemical levees along the channels.

Molecules of the present invention can be attached or immobilized to a solid surface. Immobilization of, for example, nucleic acid molecules can be achieved by a variety of methods involving either non-covalent or covalent attachment between the nucleic acid molecule and a support or surface. In an exemplary embodiment, immobilization can be achieved by coating a solid surface with streptavidin or avidin and the subsequent attachment of a biotinylated polynucleotide. Immobilization can also occur by coating a polystyrene, glass or other solid surface with poly-L-Lys or poly L-Lys, Phe, followed by covalent attachment of either amino- or sulfhydryl-modified nucleic acids using bifunctional crosslinking reagents. Amine residues may be introduced onto a surface through the use of aminosilane.

Protein-based molecules can also be immobilized using similar methods. For example, proteins can be attached to amine residues that are attached to the surface of the array. Other methods for affixing proteins to an array are well known to those skilled in the art, for example, carbodiimide fixation.

Immobilization also can be facilitated by direct covalent attachment of 5'-phosphorylated nucleic acids to chemically modified polystyrene surfaces. The covalent bond between the nucleic acid and the solid surface is formed by condensation with a water-soluble carbodiimide. This method facilitates a predominantly 5'-attachment of the nucleic acids via their 5'-phosphates.

DNA is commonly bound to glass by first silanizing the glass surface, then activating with carbodiimide or glutaraldehyde. Alternative procedures may use reagents such as 3-glycidoxypropyltrimethoxysilane (GOP) or aminopropyltrimethoxysilane (APTS) with DNA linked via amino linkers incorporated either at the 3' or 5' end of the molecule during DNA synthesis. DNA may be bound directly to membranes using ultraviolet radiation. Other non-limiting examples of immobilization techniques for nucleic acids are known.

The type of surface to be used for immobilization of nucleic acids or protein molecules is not limited to those disclosed above. In various embodiments, the immobilization surface can comprise magnetic beads, non-magnetic beads, a planar surface, a pointed surface, or any other conformation of solid surface comprising almost any material, so long as the material will allow hybridization of target nucleic acids to probe libraries.

Bifunctional cross-linking reagents can be of use in various embodiments, such as attaching a nucleic acid molecule to a surface. Exemplary cross-linking reagents include glutaraldehyde (GAD), bifunctional oxirane (OXR), ethylene glycol diglycidyl ether (EGDE), and carbodiimides, such as 1-ethyl-3-(3-dimethylaminopropyl) carbodiimide (EDC).

In certain embodiments a capture oligonucleotide can be bound to a surface. The capture oligonucleotide will hybridize with a specific nucleic acid sequence of a target nucleic acid. Once a target nucleic acid is hybridized to a capture oligo it can be covalently attached by a ligation reaction. A target nucleic acid can be released from the surface by restriction enzyme digestion, elevated temperature, reduced salt concentration, or a combination of these and similar methods.

Nucleic acid molecules to be processed/analyzed (target nucleic acids) can be prepared by any standard technique. In one aspect of the present invention, nucleic acids can be naturally occurring DNA or RNA molecules. Virtually any naturally occurring nucleic acid may be prepared and sequenced by the methods of the present invention including, without limit, chromosomal, mitochondrial or chloroplast DNA or messenger, heterogeneous nuclear, ribosomal or transfer RNA.

Methods for preparing and isolating various forms of cellular nucleic acids are well known to those skilled in the art. Cells, tissues or other source material containing nucleic acids to be analyzed can be homogenized, for example by freezing in liquid nitrogen followed by grinding in a morter and pestle. Certain tissues can be mechanically homogenized using a Waring blender, Virtis homogenizer, Dounce homogenizer or other homogenizer. Crude homogenates can be extracted with detergents, such as sodium dodecyl sulphate (SDS), Triton X-100, CHAPS, octylglucoside or other detergents known in the art. Alternatively or in addition, extraction can use chaotrophic agents such as guanidinium isothiocyanate, or organic solvents such as phenol. In some aspects, protease treatment, for example with proteinase K, can be used to degrade cell proteins. Particulate contaminants can be removed by centrifugation. Dialysis against aqueous buffer of low ionic strength can be of use to remove salts or other soluble contaminants. Nucleic acids may be precipitated by addition of ethanol at -200 C, or by addition of sodium acetate (pH 6.5) to a final concentration of 0.3 M and 0.8 volumes of 2-propanol. Precipitated nucleic acids may be collected by centrifugation or, for chromosomal DNA, by spooling the precipitated DNA with a glass pipet.

The procedures listed above are exemplary only and that many variations can be used within the scope of the present invention, depending on the particular type of target nucleic acid. For example, mitochondrial DNA is often prepared by cesium chloride density gradient centrifugation, using step gradients, while mRNA is often prepared using preparative columns from commercial sources, such as Promega (Madison, Wis.) or Clontech (Palo Alto, Calif.).

Depending on the type of nucleic acid to be prepared various nuclease inhibitors may be required. For example, RNase contamination in bulk solutions can be eliminated by treatment with diethyl pyrocarbonate (DEPC), while commercially available nuclease inhibitors may be obtained from standard sources such as Promega (Madison, Wis.) or BRL (Gaithersburg, Md.). Purified nucleic acid can be dissolved in aqueous buffer, such as TE (Tris-EDTA) and stored at -200 C or in liquid nitrogen prior to use.

In cases where single-stranded DNA (ssDNA) is to be analyzed, an ssDNA can be prepared from double-stranded DNA (dsDNA) by standard methods. Most simply, dsDNA can be heated above its annealing temperature, at which point it spontaneously disaggregates into ssDNA. Representative conditions might involve heating at 92 to 95o C for 5 min or longer.

Although the discussion above concerns preparation of naturally occurring nucleic acids virtually any type of nucleic acid that is able to hybridize with a probe library of the invention could potentially be analyzed by the methods of the present invention. For example, nucleic acids prepared by various standard amplification techniques, such as polymerase chain reaction (PCR) amplification or RT-PCR, could be analyzed within the scope of the present invention.

Target nucleic acid templates can be isolated from a wide variety of organisms including, but not limited to, viruses, bacteria, eukaryotes, mammals, and humans. In certain embodiments target nucleic acid(s) that are isolated and amplified via cloning into plasmids, M13, lambda phage, P1 artificial chromosomes (PACs), bacterial artificial chromosomes (BACs), yeast artificial chromosomes (YACs) and other cloning vectors may be sequenced using the methods of the invention. Also contemplated for use are amplified nucleic acids or amplified portions of nucleic acids. In specific embodiments a cloning vector can be linearized, immobilized, denatured and hybridized with a set(s) of probe libraries.

In the present invention, a target nucleic acid to be analyzed can be hybridized with a probe library or a plurality of probe libraries. Probe libraries can be a group of oligonucleotides or oligonucleotide analogs. In one aspect, each probe in a library is uniquely and detectably labeled by identifying the probes hybridized to a target nucleic acid, the linear order of probes can be analyzed and a nucleic acid sequence determined for the target. The analysis of a target nucleic acid molecule(s) hybridized to a series of probes can entail monitoring the target nucleic acid using a detection unit operatively connected to a microfluidic apparatus. In one aspect, one or more microfluidic chambers, channels, capillaries, pores, valves or combinations thereof may be used to process, move, and/or position a target nucleic acid for analysis. A microfluidic device can be designed to position nucleic acid molecule(s) in an extended conformation for analysis. The target nucleic acid can be manipulated so that only a single target nucleic acid molecule moves along a microchannel at a time.

In certain aspects of the present invention one or more probe libraries can be prepared for hybridization to one or more target nucleic acid molecules. For example, a set of relatively short probes containing all 4096 or about 2000 non-complementary 6-mers, or all 16,384 or about 8,000 non-complementary 7-mers can be used. A set or plurality of subsets of 8-mers and longer probes can be used that include 65,536 or about 32,000 non-complementary 8-mers.If non-complementary subsets of probes are to be used a plurality of hybridizations and sequence analyses can be carried out and the results of the analyses merged into a single data set by computational methods. For example, if a library comprising only non-complementary 6-mers were used for hybridization and sequence analysis, a second hybridization and analysis using the same target nucleic acid molecule hybridized to those probe sequences excluded from the first library would be performed.

In certain aspects, the probe library contains all possible nucleic acid sequences for a given probe length (e.g., a six-mer library would consist of 4096 probes). In such cases, certain probes will form hybrids with complementary probe sequences. Such probe--probe hybrids, as well as unhybridized probes, can be excluded from the channel of a microfluidic device leading to the detection unit.

Methods for the selection and generation of complete sets or specific subsets of probes of all possible sequences for a given probe length are known. In general, for a probe of length "n", a complete set of all possible probe sequences can be represented as 4n probes. As the probe length increases so does the number of distinct label moieties needed to uniquely label each probe. Limiting the number of label molecules required would involve the use of the shortest possible probe length consistent with the requirements for stable probe hybridization to the target molecule. In various embodiments, probes of 2 through 15 or more nucleotides in length can be used within the scope of the present invention. The length of a probe(s) will vary with hybridization, wash conditions and composition of probe library or libraries used. Generally, probes can range from about 2 to about 20 monomers in length. In one aspect, probes ranging from about 4 to about 15 monomers in length are employed, and in another aspect, probes ranging from about 6 to about 10 monomers in length are employed.

In certain embodiments, it may be useful to use probes comprising a random nucleic acid sequence in the middle of the probe and a constant nucleic acid sequences at one or both ends, a random portion and constant portion, respectively. This can be of use, for example, where the number of distinct label moieties available is lower than the number of possible probe sequences required for a probe length that is optimal for hybridization. For example, a subset of 12-mer probes could consist of a complete set of random 8-mer sequences attached to constant 2-mers at each end. Alternatively, a subset of 10-mer probes could consist of a complete set of random 8-mers attached to constant 1mers at each end, or constant 2-mers at one end. These probe libraries can be subdivided according to their constant portions and hybridized separately to a target nucleic acid followed by analysis using the combined data of each different probe library to determine the nucleic acid sequence. The skilled artisan will realize that the number of sublibraries required will be a function of the number of constant bases that are attached to the random sequences. For example, with one constant base attached to the random sequences a total of four sublibraries might be hybridized to the target. For two constant bases attached to the random sequences, a total of sixteen sublibraries might be hybridized to the target, one for each possible constant region.

An alternative embodiment employs multiple hybridizations and analyses with a single probe library containing a specific constant portion attached to random probe sequences. For any given site on a target nucleic acid, it is possible that multiple probes of different, but overlapping sequence could bind to that site in a slightly offset manner. Thus, using multiple hybridizations and analyses with a single library, a complete sequence of the target nucleic acid could be obtained by compiling the overlapping, offset probe sequences. Although this approach is somewhat similar to the "shotgun" methods used with standard sequencing, it avoids having to generate and clone multiple restricted fragments for sequencing, since only a single target nucleic acid sequence is required. Random nucleic acid sequences of a probe may include, but are not limited to about 2 to about 12 or more bases.

Each probe can have at least one covalently attached label or tag. In certain embodiments the probes may have a plurality of attached labels or tags, the combination of which is unique to a particular probe. Combinations of labels can be used to expand the number of unique labels available for specifically identifying a probe in a library. In other embodiments the probes may each have a single unique label attached. Probes with a single label as well as probes with a plurality of labels are contemplated. The only requirement is that the signal detected from each probe must be capable of uniquely identifying the sequence of that probe.

In certain embodiments one or more labels can be attached to each probe. The label will typically produce a detectable signal. Non-limiting examples of labels that could be used include fluorescent, luminescent, radioactive, phosphorescent, chemiluminescent, enzymatic, spin, electron dense, or mass spectroscopic labels. A label can be detected by using a variety of means, such as a spectrophotometer, luminometer, NMR (nuclear magnetic resonance), mass-spectroscopy, imaging systems, photomultiplier tube and/or other appropriate standard detection means. In certain embodiments conductive polymers can be used as a label. Conductive polymers are tunable to unique spectroscopic profiles based on the polymer composition, length, side chain groups and/or dopants.

Labels can be coupled to amine or thiol groups incorporated into a probe during synthesis. Labels can be coupled internally or to either terminus of a probe. A label(s) can be linked to a monomer unit of a probe via a spacer arm to reduce steric hindrance with, for example, hydrogen bond formation during probe hybridization. After synthesis, probes can be purified by high performance liquid chromatography (HPLC) or polyacrylamide gel electrophoresis (PAGE).

In certain embodiments a label can be incorporated into a precursor prior to the synthesis of a probe. Internal amino-modifications for labeling at "A" and "G" positions are also contemplated. Typically, when internal labeling is required, it is performed at a "T" position using a commercially available phosphoramidite. In certain embodiments library segments with a propylamine linker at the A and G positions are used to internally label a probe. The introduction of an internal aminoalkyl tail allows post-synthetic labeling of the probe. Linkers may be purchased from vendors such as Synthetic Genetics, San Diego, Calif.

In one embodiment automatic coupling using the appropriate phosphoramidite derivative of the label is also contemplated. These labels are coupled during the synthesis at the 5'-terminus.

In certain embodiments fluorescent dyes can be used to label probes. Fluorophores include but are not limited to (Fluorophore (Excitation/Emission))--FAM (488 nm/518 nm); HEX (488 nm/556 nm); TET (488 nm/538 nm); CY (3550 nm/570 nm); CY5 (649 nm/670 nm); CY5.5 (675 nm/694 nm); JOE (527 nm/548 nm); 6-ROX (575 nm/602 nm); Cascadde Blue (400 nm/425 nm); Texas Red (595 nm/615 nm); Rhodamine (550 nm/575 nm); Rhodamine green (502 nm/527 nm); Rhodamine red (570 nm/590 nm); Rhodamine 6G (525 nm/555 nm); 6-TAMRA (555 nm/580 nm); 5-TAMRA (543 nm/567 nm); Alexa 430 (430 nm/545 nm); Alexa 488 (493 nm/516 nm); Alexa 594 (588 nm/612 nm); Bodipy R6G (528 nm/550 nm). These fluorescent labels are commercially available from a variety of vendors. Additional fluorescent labels include Tetramethyl rhodamine (argon laser), fluorscein, 9-carboxyethyl-6-hydroxy-3-oxo-3H-xanthene and its derivatives, 7-nitrobenzofurazan, and NBD. Xanthene dyes may be covalently attached through the carboxylic acid functionality, via an amide bond with a linker amine group. Fluorescent dyes can be used in conjunction with each other and/or quencher molecules to expand the number of spectrally unique labels. Other alternative labels or tags include semiconductor nanostructures or quantum dots that can be covalently attached to a probe.

Hybridization as used herein includes, but is not limited to, forming a double- stranded molecule or forming a partially double-stranded molecule. In one aspect of the present invention, hybridization of the target nucleic acid to the probe library occurs under stringent conditions that allow hybridization between fully complementary nucleic acid sequences, but preclude hybridization between partially mis-matched sequences. For example, hybridization at low temperature and/or high ionic strength is termed low stringency. Hybridization at high temperature and/or low ionic strength is termed high stringency. Low stringency is generally performed at 0.15 M to 0.9 M NaCl at a temperature range of about 200 C to about 500 C. High stringency is generally performed at 0.02 M to 0.15 M NaCl at a temperature range of 500 C to 700 C.

It is understood that the temperature and/or ionic strength of a desired stringency are determined in part by the length of the particular probe, the length and/or base content of the target sequences, and the presence of formamide, tetrametylammonium chloride or other solvents in the hybridization mixture. Various standard hybridization solutions are well known. It is also understood that these ranges are mentioned by way of example only and that the desired stringency for a particular hybridization reaction is often determined empirically by comparison to positive and/or negative controls. Accordingly, the probes of the disclosure may be used for their ability to selectively form duplex molecules by hybridization with complementary stretches of target nucleic acids, such as DNA or RNA.

In one aspect of the present invention, relatively stringent conditions are employed to form hybridized nucleic acids comprising a target nucleic acid and one or more probe molecules. For example, relatively low salt and high temperature conditions, such as provided by about 0.02 M to about 0.10 M NaCl at temperatures of about 500 C to about 700 C. Such high stringency conditions tolerate little, if any, mismatch between the probe and the target strand. It is generally appreciated that conditions can be rendered more stringent by the addition of increasing amounts of formamide or the like.

Once a target nucleic acid is hybridized to a probe library the hybridized nucleic acid will typically be processed. In certain embodiments, non-hybridizing probes can be separated from a hybridized nucleic acid. A hybridized nucleic acid can be separated from non-hybridized probes before or after introduction into a microfluidic device by methods well known to those skilled in the art. The separation of non-hybridized probes can be accomplished by, for example, selective precipitation, size exclusion columns, selective immobilization of a target nucleic acid or any equivalent technique.

One embodiment of the present invention is directed to an apparatus that is a microfluidic system comprising an input chamber, channel, chemical array, output chamber and a detection unit that is operatively connected to the channel.

A particular aspect of the present invention is directed to a microfluidic device comprising one or more chemical arrays together with one or more detection systems. The present embodiment includes one or more microfluidic channels. These channels provide passage routes for analytes as they traverse the microfluidic device. In one aspect, a detection device can be continuous with or adjacent to a microfluidic channel downstream from a chemical array. Following the separation of analytes within a sample, a detection device can be used to detect, quantitate and characterize separated analytes.

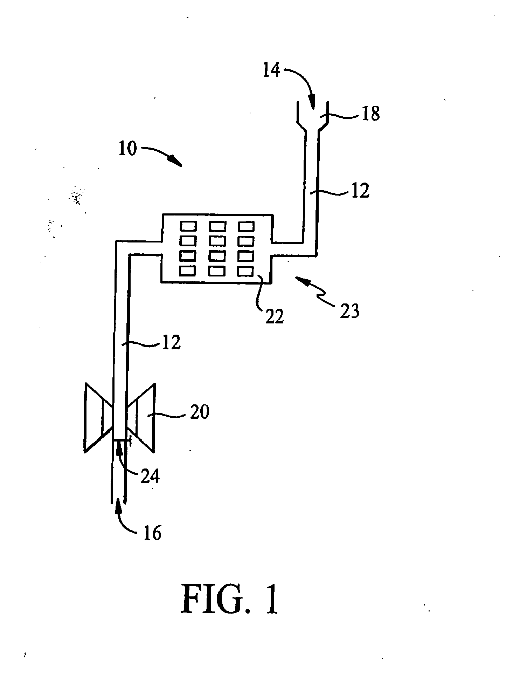

Figure 1 depicts an embodiment of the system of the present invention. Essentially, the microfluidic system 10 of the present invention comprises a microfluidic device 23 including a channel 12 having an input 14 and an output 16 port. The system 10 will typically include an input or reaction chamber 18 where one or more target molecules can be prepared by, for example, hybridizing to a probe library. A detection unit 20 can be positioned in-line with, for example, the channel 12 in order to monitor molecules flowing through the channel 12. In one aspect, the detection unit 20 is downstream from a separation device or unit or chemical array(s) 22. The separation unit 22 can be a miccroarray(s) as depicted in FIG. 1. Flow in and out of input chamber 18 can be controlled by one or more microvalves (not shown) and the like operatively connected to the inlet port 14 and outlet port 16. Additional features of microfluidic device systems may be included and are disclosed for example in US patent 6,767,731, the entirety of which is incorporated by reference.

The embodiment depicted in FIG. 1 illustrates the use of a chemical array(s) 22. In one aspect, the chemical array(s) 22 is used to separate the target molecules. The chemical array(s) 22 is disposed to receive one or more samples from channel 12. In one aspect, a plurality of channels is used to convey sample to the chemical array(s) directly or after connecting to a mixing channel (not shown). Following the separation process, the molecules can be transferred to an in-line detector 20 such as depicted in FIG. 1. Following detection the molecule can continue to egress through the microfluidic system via channel 24. In one aspect of this embodiment, a plurality of chemical arrays is disposed to receive sample. In a particular aspect these chemical arrays are arranged in series. In another aspect, the chemical arrays are arranged in parallel. The chemical arrays can comprise the same compositions of separation material or they can vary as to their separation components.

Transport of the sample molecules can be accomplished through osmotic pressure, fluidic pressure, Brownian motion, diffusion, osmotic gradient, electro-osmotic gradient, gravity, capillary action, active or passive transport, electrophoresis, pressure, suction or creation of a vacuum or artificial vacuum or other physical or mechanical forces that are well know in the art. The technique is not important, however, functionally it is important that the technique efficiently regulates and allows the sample molecules (including the targets) to bind to the separation components of the chemical array.

In one aspect of the present embodiment, a sample comprising a plurality of molecules can contact the separation unit 22 or chemical array(s). The separation device can comprise separation components such as specific oligonucleotides, antibodies or alike depending upon the intended separation criteria. The non-specific molecules, i.e., those molecules in the sample that do not specifically interact with the components of the separation device or unit 22 can be flushed away leaving those sample molecules that interact with the device 22. Then differential elution from the separation device 22 or unit can be accomplished based upon the chemistry of interaction between the sample molecule and separation components. For example, changes in salt concentration can disrupt interactions. These methods are well known to those skilled in the art. The microfluidic system 10 depicted in FIG. 1 optionally further includes a valve 24 which can be used to isolate an eluted sample molecule for detection. The valve 24 can be used to stop flow or regulate flow velocity.

Another embodiment of the present invention is directed toward the analysis of proteins, protein fragments, and derivatives thereof employing a microfluidic system comprising a chemical array and nanodetector. In this embodiment, separation components (or probes as used above) of the chemical array can be antibodies, either monoclonal or polyclonal. Other separation components well known to those skilled in the art can be employed that are specific for protein-based biomolecules. The illustrative depiction of FIG. 1 equally applies to this embodiment.

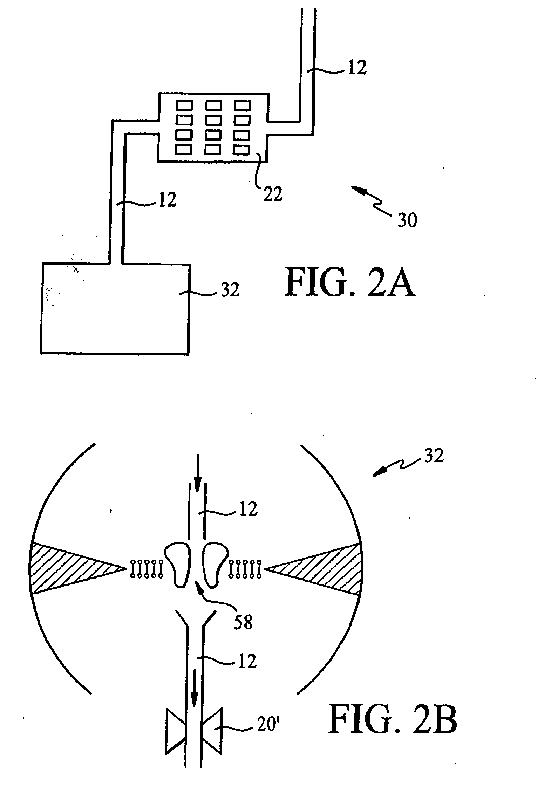

One embodiment of the present invention (shown in Figure 2B) is directed toward a nanopore system 32 that comprises the detection device 20 of the present invention. Figure 2A illustrates a nanopore - chemical array system 30, wherein the nanopore system 32 is positioned downstream from the chemical array 22 (note that the figures are for illustration purposes only and are not drawn to scale). Once the target molecules have been separated from the sample via the chemical array 22 they can then pass to the nanopore system 32. The nanopore system 32 can receive the targets and can also record and quantify their nature, number, elution profile and order of elution from the array 22. In one aspect, the length of the target molecule is determined. Measurement of other parameters is also possible based on the nature of the nanopore system 32 employed. The nanopore system 32 can comprise a variety of devices and systems well known in the art. The nanopore system 32 can be coupled to the chemical array 22 either directly or through any number of conduits, channels, attachments or devices (a channel 12 is depicted in both FIGS. 1 and 2A).

Typical nanopore systems used with the present invention can comprise and not be limited to devices disclosed and discussed in U.S. Patent No. 5,795,782, U.S. Patent No 6,015,714, WO 01/81896 A1, WO 01/81908 A1, the entire teachings of which are incorporated herein by reference. The nanopore system may employ a pore molecule such as the receptor for bacteriophage lambda (LamB) or alpha-hemolysin, to record the process of biopolymer injection or traversal through the channel pore when that channel has been isolated on a membrane patch or inserted into a synthetic lipid bilayer. Nanopores also may be generated from non-biological material, such as from a solid-state material. Solid-state materials include, but are not limited to, organic and inorganic materials, such as microelectronic materials, insulating materials, such as $Si_3N_4$, $Al_2O_3$, $SiO$, organic and inorganic polymers such as polyamide, plastics such as Teflon®, elastomers such as silicone rubber, and glasses. Nanopores may be generated using integrated circuit (IC) fabrication techniques, and other methods, including, but not limited to, photolithography, e-beam lithography, epitaxial growth, ion beam sputtering, etching, delivery of TEM electron beams, and plasma enhanced chemical vapor deposition (PECVD). See, e.g., as described in U.S. Patent No. 6,706,204. See, also, Li et al., "Ion beam sculpting at nanometer length scales", Nature, 412: 166-169, 2001. Pores generated by one method may be altered size after initial fabrication, such as by etching of PECVD.

In one embodiment, depicted in Figure 2B, the apparatus used for the nanopore system comprises: 1) an ion-conducting pore or channel 58, which modified to include a linked or fused polymerizing agent or which may be fabricated from a solid-state material as described above; 2) the reagents necessary to construct and produce a linear polymer to be characterized, or the polymerized molecule itself (not shown); and 3) a detector 20 of the present invention.

Channels and pores useful in the invention can vary (e.g., minimum pore size around 2 -9 nm). Pore sizes through which a polymer is drawn will be e.g., approximately 0.5 -2.0 nm for single stranded DNA; 1.0 -3.0 nm for double stranded DNA; and 1.0 - 4.0 nm for polypeptides. These values are not absolute, however, and other pore sizes might be equally functional for the polymer types mentioned above.

Examples of bacterial pore-forming proteins which can be used in the invention include Gramicidin (e.g., Gramicidin A, B, C, D, or S, from Bacillus brevis; available from Fluka, Ronkonkoma, N.Y.); Valinomycin (from Streptomyces fulvissimus; available from Fluka), LamB (maltoporin), OmpF, OmpC, or PhoE from Escherichia coli, Shigella, and other Enterobacteriaceae, alpha-hemolysin (from S. aureus), Tsx, the F-pilus, and mitochondrial porin (VDAC).

A modified voltage-gated channel can also be used in the invention, as long as it does not inactivate quickly, e.g., in less than about 500 msec (whether naturally or following modification to remove inactivation) and has physical parameters suitable for, e.g., polymerase attachment (recombinant fusion proteins) or has a pore diameter suitable for polymer passage. Methods to alter inactivation characteristics of voltage gated channels are well known in the art (see e.g., Patton, et al., Proc. Natl. Acad. Sci. USA, 89:10905-09 (1992); West, et al., Proc. Natl. Acad. Sci. USA, 89:10910-14 (1992); Auld, et al., Proc. Natl. Acad. Sci. USA, 87:323-27 (1990); Lopez, et al., Neuron, 7:327-36 (1991); Hoshi, et al., Neuron, 7:547-56 (1991); Hoshi, et al., Science, 250:533-38 (1990), the entire teachings of which are incorporated by reference).

Appropriately sized physical or chemical pores may be induced in a water-impermeable barrier (solid or membranous) up to a diameter of about 9 nm, which should be large enough to accommodate most polymers (either through the pore or across its opening). Any methods and materials known in the art may be used to form pores, including track etching and the use of porous membrane templates that can be used to produce pores of the desired material (e.g., scanning-tunneling microscope or atomic force microscope related methods).

Chemical channels or pores can be formed in a lipid bilayer using chemicals (or peptides) such as Nystatin, as is well known in the art of whole-cell patch clamping ("perforated patch" technique); ionophores such as A23187 (Calcimycin), ETH 5234, ETH 157 (all chemicals available from Fluka, Ronkonkoma, N.Y.; this list is not intended to be limiting), peptide channels such as Alamethicin.

To produce pores linked with polymerase, synthetic/recombinant DNA coding for a fusion protein can be transcribed and translated, then inserted into an artificial membrane in vitro. For example, the C-terminus of E. coli DNA polymerase I (and by homology, T7 polymerase) is very close to the surface of the major groove of the newly synthesized DNA. If the C-terminus of a polymerase is fused to the N-terminus of a pore forming protein such as colicin E1 and the colicin is inserted into an artificial membrane, one opening of the colicin pore should face the DNA's major groove and one should face the opposite side of the lipid bilayer. For example, the colicin molecule can be modified to achieve a pH optimum compatible with the polymerase as in Shiver et al. (J. Biol. Chem., 262:14273-14281 1987, hereby incorporated by reference). Both pore and polymerase domain can be modified to contain cysteine replacements at points such that disulfide bridges form to stabilize a geometry that forces the pore opening closer to the major groove surface and steadies the polymer as it passes the pore opening. The loops of the pore domain at this surface can be systematically modified to maximize sensitivity to changes in the DNA sequence.

Since channel events can be resolved in the microsecond range with the high resolution recording techniques available, the limiting issue for sensitivity with the techniques of our invention is the amplitude of the current change between bases. Resolution limits for detectable current are in the 0.2 pA range (1 pA=6.24 x 106 ions/sec). Each base affecting pore current by at least this magnitude is detected as a separate base. It is the function of modified bases to affect current amplitude for specific bases if the bases by themselves are poorly distinguishable.

The following specific examples of current based polymer characterization are presented to illustrate, not limit the invention. The LamB pore Maltoporin (LamB) is an outer membrane protein from E. coli that functions as a passive diffusion pore (porin) for small molecules and as a specific transport pore for passage of maltose and maltodextrins (Szmelcman et al., 1975, J. Bacteriol., 124:112-18). It is also the receptor for bacteriophage lambda (Randall-Hazelbauer and Schwartz, 1973, J. Bacteriol. 116:1436-1446). Three identical copies of the LamB gene product assemble to form the native pore. Each subunit (MW. about 48,000) is composed of predominantly β-structure and is a pore in itself, though it is thought that the three pores fuse into one at the periplasmic side of the membrane (Lepault et al., 1988, EMBO, J., 7:261-68).

The LamB pore is extremely stable, and high time resolution recordings can be made for use in this invention. The time resolution of channel conductance measurements with the conventional planar lipid bilayer technique is limited because of the background noise associated with the high electrical capacitance of bilayers formed on large diameter apertures (100-200 microns), but smaller apertures or insulated glass microelectrodes can improve the resolution of LamB channel recordings. In one aspect, improved LamB conductance recordings will use the pipette bilayer technique (Sigworth et al., supra). Discussion and examples of the invention using the bacterial pore-forming protein alpha -hemolysin toxin (alpha-toxin or alpha-hemolysin) are below. This system operates as nucleic acid polymers are threaded through the toxin pore, and the monomeric charges and physical obstruction alter ionic conductance through the pore. Because the purine and pyrimidine bases in the polynucleotide have differing molecular sizes and chemical properties, a specific ionic current will flow as each nucleotide enters and passes through the channel, thus electro-sensing the monomer sequence in the linear polymer.

The bacterial pore-forming protein from S. aureus, $\alpha$-hemolysin, spontaneously embeds in lipid bilayers to produce a large, heptameric, current conducting channel $\alpha$-hemolysin forms a robust channel which has the appropriate diameter to admit a single stranded DNA polymer. Furthermore, it can remain open for indefinite time periods when subjected to a continuous voltage gradient. Diphytanoyl phosphatidylcholine has been used to form lipid bilayer membranes across 0.2 mm holes in a Teflon film separating two compartments containing buffer solution of the following composition: 1M NaCl, 10 mM Tris, pH 7.4 (Montal et al., 1972, PNAS, 69:3561, the entire teaching of which is incorporated herein by reference). In initial, multi-channel experiments, $\alpha$-hemolysin has been added to the cis side of the bilayer and allowed to incorporate into the bilayer before excess $\alpha$-hemolysin is removed. Voltage can be applied across the bilayer are varied from 0 mV to 140 mV. Under the buffer conditions used, the channels continuously open before addition of polynucleotide. After addition of poly A to the cis chamber, the channels begin to exhibit transient blockades at potentials greater than 100 mV. Similar effects can be seen with poly C and poly U polymer additions. Significantly, the blockades occur when the voltage is applied in the direction expected to produce electrophoretic movements of a poly-anion like RNA from the cis to the trans side of the channel, i.e., only when the trans side is positive.

One embodiment is directed to methods of employing a nanopore-chemical array system 30 (the "apparatus"). Referring to FIG. 2A, a sample is introduced into the system 30 by any of a number of methods including injection, manual application and the like. There may be a sipper (not shown) at the entrance of the channel 12 which projects into the sample to draw the sample into the channel 12. A design of a sipper is described in the patent application entitled "Extensible Spiral for Flex Circuit"(Serial No. 09/981,840, to Agilent Technologies, Inc., also identified as U.S. Publication No. 2003/0070833), which is hereby incorporated by reference. Ideally, the entrance of the channel 12 can be coupled to a valve that allows for sample injection and then switches to inject a wash fluid. There is no requirement that the sample volume match the volume of the channel 12. It may be substantially larger or smaller. The sample can contain a target of interest. The sample with a potential target of interest moves past the separating components of the chemical array 22. The separation components of the array 22 then capture the target molecules and remove them from the sample. The apparatus 30 can be designed to regulate the sample flow through the channel 12. The sample may be allowed to remain or cycle through channel 12 for minutes or hours as necessary to ensure adequate binding or hybridization to a separation component. The apparatus 30 can include devices to control the time of sample exposure and heaters and coolers to control the temperature of the sample. After sufficient time has elapsed for binding or hybridization, the sample is washed out of the channel and wash buffers are introduced to remove any non-specifically bound molecule. The apparatus 30 can control the timing and temperature of the wash buffers.

An elution buffer or other agent can then be flushed through the system 30. This allows the array 22 to release the targets that have bound to the separation components of the array 22. The target molecules can also be released by raising the temperature of the solution or array. The most efficient methods will depend upon the diffusion characteristics of the targets in a particular solution. Other mechanisms or methods for releasing the captured targets can also be employed. Depending on the specific construction of the system 30, the captured targets may be eluted from either end of the linear array. Therefore, the order of elution may be identical to the order of the separation components in the linear array or in the opposite order, or some variation thereof.

In one embodiment as shown in FIG. 2B, target molecules enter a nanodetector 20' from nanopore 58 in a nanopore system 32. Typically, eluted molecules will enter the detector in the order in which they have eluted from the array 22. The detector can then record and determine the order, time, chemical composition, quantity or amount of target. Figure 2B illustrates one example of such an embodiment. The nanopore system 32 is downstream from the chemical array 22 (see FIG. 2A). The targets can contact the nanopore system 32 via a channel 12. The target molecules that penetrate the nanopore can then enter the channel 12 again and continue on to a nanodetector 20'.

Liquids, mixtures, solutions and reacting mixtures are often characterized using optical techniques such as photometry, spectrophotometry, fluorometry, or spectrofluorometry. In order to characterize samples of these liquids, the liquid is usually contained in a vessel referred to as a cell or cuvette two or more of whose sides are of optical quality and permit the passage of those wavelengths needed to characterize the liquid contained therein. When dealing with very small sample volumes of say from 1 to 2 microliters, it is difficult to create cells or cuvettes small enough to be filled and permit the industry standard 1 cm optical path to be used. It is also difficult and/or time consuming to clean these cells or cuvettes for use with another sample. In the case of photometry or spectrophotometry, the value most commonly sought is the sample absorbance A defined by

$$A = -\log T,$$

wherein T is the transmittance, or $A = \log(I/IO)$,
wherein 10 is the level of light transmitted through a blank sample (one containing all components except the one being measured or one whose absorbance is known to be negligible and with optical properties identical to those of the sample being measured), and I the level of light transmitted through the sample being measured.

Most commonly the absorbance value is measured in a cell or cuvette with a 1 cm path length. However, Lambert's Law states that for a collimated (all rays approximately parallel) beam of light passing through a homogeneous solution of uniform concentration the absorbance is proportional to the path length through the solution. For two path lengths X and Y, where

$$(\text{Absorbance x})/(\text{Absorbance y})=(\text{Path length x})/(\text{Path length y}).$$

Thus it is reasonable that absorbance can be measured with path lengths other than 1 cm and corrected for path length to the equivalent value for a 1 cm path which can be more easily compared to data from other spectrophotometers. The sample path lengths in the range of 0.2 to 2 mm used in this invention can be used to generate absorbance values that can be easily corrected to the 1 cm path equivalent.

The present invention comprises a detection system that is in-line with a microfluidic device. As sample traverses through the microfluidic device via one or more channels, the detection apparatus is disposed in such a manner so as to eliminate the need for transferring any portion of the traversing sample from the microfluidic device to a detection system.

One aspect of the present invention pertains to a detection system that obviates the need to have exposed fiber optics on the instrument. Exposed fiber leads to error in transmission measurements due to bend-dependent fiber loss, as well as the possibility for breakage during use. Further, the detection device of the present invention enables a smaller package size for the UV/VIS spectrophotometer. Additionally, the detection system of the present invention provides a more robust optical train that can include spectral filters to increase the signal-to-noise ratio.

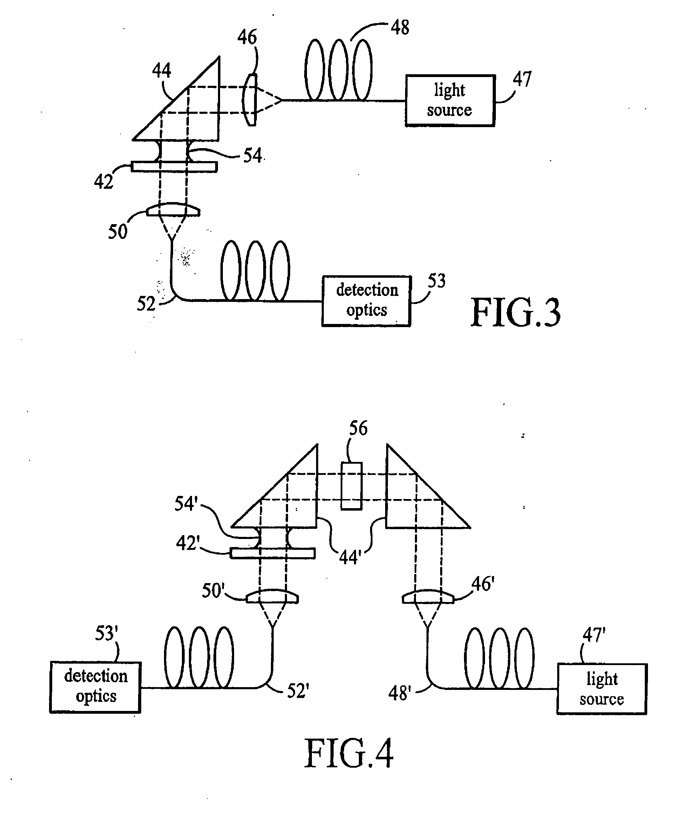

One embodiment of the present invention as shown in FIG. 3 is directed to a detection system 40 that comprises a sample plate 42 positioned in opposition to a steering prism 44 which is adjacent to a collimating lens 46 which receives light from a light source 47 via a fiber 48. The detection system 40 further comprises a coupling lens 50 adjacent to the sample plate 42 and light is directed through this coupling lens 50 and into a detection optics center via a fiber 52. As depicted in FIG. 3, a sample 54 is suspended between the sample plate 42 and coupling lens 50. (See, FIG. 3). The suspension of the sample 54 is facilitated by surface tension forces between the two planar surfaces, i.e., the sample plate 42 and coupling lens 50.

In this embodiment, the detection system 40 has a fiber-coupled light source (e.g., a pulsed Xe lamp) and a collimating lens 46 used to collimate light from the source. The system 40 also has a steering prism 44 that utilizes total internal reflection to steer light from the source fiber 48 to the liquid sample 54. The sample plate 42 is where the sample 54 is introduced. The coupling lens 50 is used to coupled light into an optical fiber 52. Finally, the device 40 has a fiber-coupled detection optics center 53, e.g., a spectrometer filter wheel with a 1-D or single photo-diode configuration, respectively.

It is important to note that this embodiment employs a separate fiber-lens configuration that are connected to the light source from the liquid sample volume. Thus, both the source- and detection-side fibers can be constructed into the body of an instrument, protected from breakage or movement during measurements.

Another embodiment of the present invention is directed to a detection system 40' that comprises a plurality of steering prisms and other optical components. Figure 4 depicts such an embodiment. The detection system 40' depicted in FIG. 4 comprises multiple steering prisms 44'. Optionally disposed between these steering prisms 44' can be a spectral filter or other optical component 56. As with the previous detection system, a sample plate 42' is disposed in opposition to one of the steering prisms. Adjacently disposed to the sample plate 42' is a coupling lens 50'. Depicted in FIG. 4 is a sample 54' suspended between the sample plate 42' and the coupling lens 50'. A light source 47' provides light energy which is carried through a fiber 48' and is transmitted through a collimating lens 46'. The light after passing through and being directed by the steering prisms 44' comes into contact with the sample 54'. The light then passes through the sample plate 42' and coupling lens 50' and enters the detection optics center.

If desired, optical elements such as filters or beam shaping optics can be incorporated into the steering prism assemblies 44'. In FIG.4, a filter 56 is depicted inserted between the two steering prism assemblies 44' that cuts-off IR and/or UV to enhance background light that could corrupt the signal in the form of stray light.

One embodiment of the present invention pertains to a method for separating and analyzing a sample. The method of the instant invention comprises introducing a sample into a microfluidic device described herein. This microfluidic device comprises a chamber, one or more channels in communication with the chamber, one or more separation units that is communication with one or more channels, and a detection unit that is in communication with one or more channels. In one aspect, the detection unit is disposed downstream from the separation unit. In a particular aspect, the separation unit comprises a microarray which facilitates separation of the sample based upon a predetermined chemistry of physico-chemical characteristic.

In one aspect of this embodiment, the sample comprises a biological matrix. This biological matrix can be selected from one or more biological fluids such as blood, urine, sweat, exudates, and alike. The matrix can also be selected from cell and/or tissue extract. The biological molecules of the matrix can comprise proteins, nucleic acids, lipids, carbohydrates, modifications thereof, and combinations thereof.

A sample is added to the chamber of the microfluidic device under conditions suitable for separation. Suitable conditions include an appropriate separation medium that provides a fluid medium for the sample to traverse the microfluidic system. An example of a suitable separation medium is a buffer that will maintain biological integrity of the components of a sample and also facilitate appropriate differential separation via the microarray unit. One skilled in the art can determine what appropriate fluid (buffer) is required for a particular application.

The channels of the microfluidic system provide pathways for movement of fluid throughout the microfluidic system including the sample-containing fluid. One or more channels provide fluid communication between the chamber and microarray unit. In one aspect, the sample exits the chamber and traverses through a channel eventually entering the microarray unit. One skilled in the art will appreciate that there can be a plurality of microarray units. The microarray units comprise molecules (separation components) that will, based upon the conditions provided, specifically interact with target sample molecules. (A complete discussion of this is provided above.) Under suitable conditions target molecules will interact with immobilized molecules of the array.

As certain molecules within the sample interact with the immobilized molecules of an array the remainder of the sample can exit the array and leave the microfluidic device. A practitioner could then introduce probes that are specific for certain predetermined sample molecules that are in complexes within the arrays. A practitioner could elute (differentially or batch) the sample molecules from the complex. A practitioner could combine both techniques. There are various techniques well known to those skilled in the art. As the eluted sample molecules, in whatever form, exit the microarray, they traverse the detection region, i.e., the region of the microfluidic device comprising a detection unit. It is here in this region that the detection unit detects molecules. Typically, the detection unit detects molecules downstream of the microarray device.

Although the invention has been described with respect to various embodiments and methods, it should be realized this invention is also capable of a wide variety of further and other embodiments and methods within the spirit and scope of the appended claims.

**Claims**

1.  A microfluidic system used to separate and analyze target molecules within a sample, comprising:

    (a) a chamber;
    (b) a channel in communication with said chamber;
    (c) a separation unit in communication with said channel; and
    (d) a detection unit in communication with said channel, wherein said detection unit is downstream from said separation unit.

2.  The system of claim 1, wherein the target molecules are selected from the group consisting of nucleic acids, proteins, protein fragments, and modifications thereof.

3.  The system of claim 2, wherein said nucleic acids are DNA, RNA, PNA, LNA or a combination of both.

4.  The system of claim 3, wherein the size of said nucleic acids ranges from about 10 to about 5,000,000 nucleotides.

5.  The system of claim 1, wherein said target molecules are hybridized to labeled probes, wherein each probe is distinguishably labeled.

6.  The system of claim 1, wherein said separation unit is a chemical array.

7.  The system of claim 1, wherein said separating unit is a plurality of chemical arrays and said chemical arrays are in communication with said channel, and wherein said plurality of chemical arrays are upstream of said detection unit.

8.  The system of claim 1, wherein said separation unit has one or more separation components.

9.  The system of claim 8, wherein said separation components comprise oligonucleotides that interact with said target molecules.

10. The system of claim 8, wherein said separation components comprise antibodies or antibody fragments that interact with said target molecules.

**11.** The system of claim 1, wherein said detection unit comprises

(a) a sample plate;
(b) one or more steering prisms to direct light positioned in opposition to said sample plate;
(c) a coupling lens disposed adjacent to said sample plate;
(d) a collimating lens positioned adjacent to said steering prism;
(e) a light source; and
(f) a detection optics center.

**12.** The device of claim 11, wherein said detection unit further comprising an optical fiber and a detection optics center fiber, wherein said optical fiber and said detection optics center fiber are physically separated from a sample that is disposed between said sample plate and said coupling lens.

**13.** A method for separating and analyzing target molecules from a sample, comprising:

a. introducing the sample to a microfluidic system, wherein said microfluidic system has:

(i) a chamber;
(ii) a channel in communication with the chamber;
(iii) a separation unit in communication with the channel; and
(iv) a detection unit in communication with said the channel, wherein the detection unit is downstream from the separation unit;

b. separating the target molecules in the sample by passing the sample through the separation unit; and
c. analyzing the target molecules, when the target molecules exit the separation unit and traverse through the detection unit.

**14.** The method of claim 13, wherein the detection unit comprises

(a) a sample plate;
(b) one or more means to direct light that is positioned in opposition to said sample plate;
(c) a coupling lens that is disposed adjacent to said sample plate;
(d) a collimating lens that is positionally adjacent to said steering prism;
(e) a light source; and
(f) a detection optics center.

**15.** The method of claim 13, wherein the target molecules are selected from the group consisting of nucleic acids, proteins, protein fragments, and modifications thereof.

**16.** The method of claim 15, wherein the nucleic acids are DNA, RNA, PNA, LNA or a combination of both.

**17.** The method of claim 16, wherein the size of said nucleic acids ranges from about 10 to about 5,000,000 nucleotides.

**18.** The method of claim 13, wherein the target molecules are hybridized to labeled probes, wherein each probe is distinguishably labeled.

**19.** The method of claim 13, wherein the separation unit is a chemical array.

**20.** The method of claim 13, further comprising separating the target molecule by the use of one or more separation components, wherein at least one of the separation components interacts with the target molecules.

FIG. 1

FIG. 2A

FIG. 2B

FIG.3

FIG.4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5948902 A
- US 4683195 A
- US 4683202 A
- US 4965188 A
- US 5807522 A
- WO 9525116 A
- WO 9841531 A
- US 5449754 A
- US 4458066 A
- US 4500707 A
- US 5153319 A
- US 5869643 A
- EP 0294196 A
- US 6767731 B
- US 5795782 A
- US 6015714 A
- WO 0181896 A1
- WO 0181908 A1
- US 6706204 B
- WO 09981840 A
- US 20030070833 A

### Non-patent literature cited in the description

- Solid-Phase Synthesis. 1975
- **SAMBROOK ; FRITSCH ; MANIATIS.** Molecular Cloning: A Laboratory Manual
- DNA Cloning. vol. I and II
- Oligonucleotide Synthesis
- Nucleic Acid Hybridization
- Methods In Enzymology. Academic Press, Inc,
- **BEAUCAGE ; CARRUTHERS.** *Tetrahedron Lett.,* 1981, vol. 22, 1859-1862
- **MATTEUCCI et al.** *J. Am. Chem. Soc.,* 1981, vol. 103, 3185
- **LETSINGER, R.L. ; MAHADEVAN, V.** *J. Amer. Chem. Soc.,* vol. 88, 5319-5324
- **MESSING, J.** *Methods Enzymol.,* 1983, vol. 101, 20-78
- **CARUTHERS.** *Science,* 1985, vol. 230, 281-285
- **ITAKURA et al.** *Ann. Rev. Biochem.,* vol. 53, 323-356
- **HUNKAPILLAR et al.** *Nature,* 1984, vol. 310, 105-110
- Synthesis of Oligonucleotide Derivatives in Design and Targeted Reaction of Oligonucleotide Derivatives. CRC Press, 100
- **LI et al.** Ion beam sculpting at nanometer length scales. *Nature,* 2001, vol. 412, 166-169
- **PATTON et al.** *Proc. Natl. Acad. Sci. USA,* 1992, vol. 89, 10905-09
- **WEST et al.** *Proc. Natl. Acad. Sci. USA,* 1992, vol. 89, 10910-14
- **AULD et al.** *Proc. Natl. Acad. Sci. USA,* 1990, vol. 87, 323-27
- **LOPEZ et al.** *Neuron,* 1991, vol. 7, 327-36
- **HOSHI et al.** *Neuron,* 1991, vol. 7, 547-56
- **HOSHI et al.** *Science,* 1990, vol. 250, 533-38
- **SHIVER et al.** *J. Biol. Chem.,* 1987, vol. 262, 14273-14281
- **SZMELCMAN et al.** *J. Bacteriol.,* 1975, vol. 124, 112-18
- **RANDALL-HAZELBAUER ; SCHWARTZ.** *J. Bacteriol.,* 1973, vol. 116, 1436-1446
- **LEPAULT et al.** *EMBO, J.,* 1988, vol. 7, 261-68